# EUROPÄISCHE PATENTSCHRIFT

(11) **EP 1 445 524 B1**
(45) Veröffentlichungstag und Bekanntmachung des Hinweises auf die Patenterteilung: **02.08.2006**
(21) Anmeldenummer: 04000379.0
(22) Anmeldetag: 10.01.2004
(51) Int. Cl.: F16K 49/00, F16K 27/06

(54) **Beheizbarer Kugelhahn und damit ausgestattete Rohrleitung**
Heatable ball valve and pipeline equipped with said ball valve
Robinet à tournant sphérique et conduit equipé avec ce robinet

(30) Priorität: 04.02.2003 DE 20301744 U
(43) Veröffentlichungstag der Anmeldung: 11.08.2004
(73) Patentinhaber: Cognis IP Management GmbH, 40589 Düsseldorf (DE)
(72) Erfinder: Neumayer, Frank, 40789 Monheim (DE); Küsgen, Rainer, 40764 Langenfeld (DE); Wölfel, Helge, 40229 Düsseldorf (DE)

(56) Entgegenhaltungen:
- DE-A- 3 147 295
- DE-C- 568 597
- DE-C- 3 436 994
- GB-A- 565 902
- US-A- 3 038 489
- US-A- 3 894 718

## Beschreibung

Die Erfindung betrifft eine beheizbare oder kühlbare Absperrarmatur mit Flanschen an der Einlass- und an der Auslassseite und mit einem Einlassstutzen und einem Auslassstutzen für das durchströmende Fluid, wobei der Einlassstutzen und der Auslassstutzen von dem jeweiligen Flansch nach außen ragen und wobei mindestens einer der Stutzen von einem Außenstutzen umgeben ist, und wobei der mindestens eine Stutzen und der umgebende Außenstutzen einen einseitig geschlossenen Ringraum für das Heiz- oder Kühlmedium bilden.

Im Rahmen der Erfindung liegt es, wenn anstelle der Beheizung des Kugelhahns eine Kühlung vorgenommen wird, welche erfindungsgemäß ebenfalls möglich ist. Der Einfachheit wird jedoch nachfolgend nur von Beheizen gesprochen, wodurch jedoch keine Einschränkung vorgenommen werden soll.

Eine beheizbare oder kühlbare Absperrarmatur der eingangs genannten Art ist aus der DE 31 47 295 A bekannt. Die dort gezeigte Absperrarmatur ist mit ihren Flanschen am Einlass und am Auslass in eine Einrichtung zum Beheizen und Kühlen eingebaut. Diese Einrichtung besteht aus zwei im Abstand angeordneten Flanschen mit Anschlussstutzen, die jeweils von einem Außenstutzen umgeben sind. Der zwischen den Stutzen und den Außenstutzen gebildete Ringraum geht unmittelbar über in den Ringraum einer Doppelmantel-Rohrleitung. In einer der Ausführungsformen erstreckt sich dieser Ringraum, in dem das Heiz- oder Kühlmedium fließt, unmittelbar bis an die Außenseite der Flansche der Heiz- oder Kühleinrichtung. Die Ringräume für den Einlassstutzen und für den Auslassstutzen sind über eine Umgehungsleitung miteinander verbunden.

Die Beheizungseinrichtung nach diesem Dokument ist für alle Einbauteile mit Normabmessungen geeignet. Ein Kugelhahn ist hier jedoch nicht ausdrücklich genannt.

In der chemischen Industrie und in zahlreichen anderen Industriezweigen ist es oft erforderlich, Flüssigkeiten mit einem Erstarrungspunkt oberhalb der üblichen Temperatur, zum Beispiel Fettsäuren und Fettsäurederivate, über Rohrleitungen zum Bestimmungsort zu fördern. Die Rohrleitungen sind daher mit einem Heizmantel umgeben. Rohrarmaturen wie Kugelhähne haben eine relativ große Oberfläche und die erwärmten Fluide kühlen sich daher im Bereich dieser Armaturen stärker als bei den glatten Rohrabschnitten ab. Die Abkühlung kann so stark sein, dass die Flüssigkeit innerhalb dieser Armaturen erstarrt und zu einer Verstopfung der Leitung führt. Eine Wärmedämmung der Armaturen ist in vielen Fällen schwierig oder sogar unmöglich.

Es sind daher beheizbare Armaturen und insbesondere auch beheizbare Kugelhähne entwickelt worden, die jedoch die gestellten Forderungen nicht restlos befriedigen können. Beispiele für beheizte Kugelhähne finden sich im deutschen Gebrauchsmuster DE 94 07 069 U1 (Hoechst AG) und in der österreichischen Patentschrift AT 386 470 B (IPARI SZERELVENY ES GEPGYAR). Hier ist das die Verschlusskugel tragende Mittelteil, also das Gehäuse, von einem separaten Heizmantel umgeben, welcher mit seinen Ein- und Auslässen an einen Wärmeträgerkreislauf anzuschließen ist. Falls die Dichtungen im Mittelteil des Kugelhahns oder auch die Verschlusskugel selber ausgetauscht werden müssen, ist es jedoch erforderlich, dass der Wärmeträger, zum Beispiel Wärmeträgeröl oder Heizdampf aus diesem separaten Heizkreislauf abgelassen werden muss, wobei die Gefahr von Verbrühungen besteht. Dann müssen die Anschlüsse gelöst werden. Erst dann können die Schrauben an den Flanschen gelöst werden, so dass das Mittelteil des Kugelhahns aus dem Raum zwischen den beiden Flanschen herausgezogen werden kann, um die Dichtungen beziehungsweise die Verschlusskugel auszutauschen. Neben dieser umständlichen Handhabung ist der erforderliche separate Heizkreislauf nachteilig.

Bei kommerziell erhältlichen beheizbaren Kugelhähnen sind aus baulichen Gründen häufig mehrere, nicht zusammenhängende Heizräume vorgesehen, die jeweils nur einen Anschluss für die Zufuhr und den Abfluss des Heizmediums haben. Die Beheizung dieser Kugelhähne ist in der Regel nicht zufriedenstellend, da zum einen die separaten Heizräume Totzonen aufweisen, die vom Wärmeträger nicht durchströmt werden, und weil zum anderen infolge des sowohl für den Hinals auch für den Rückfluss vorgesehenen einzigen Rohres für den jeweiligen Heizraum die zuzuführende Wärme nicht in ausreichendem Maße an die zu beheizenden Flächen gelangt.

Aus der DE 28 32 505 U1 (Schnell) ist ein beheizbarer Schieber bekannt. Um das Gehäuse des Schiebers ist ein Mantel geschweißt. Durch den so gebildeten Mantelraum kann ein Heizmedium wie Dampf strömen.

Ein Kugelhahn ist verglichen mit den üblicherweise relativ großen Schiebern jedoch in der Regel zu klein für einen solchen Wärmemantel. Ein Austausch der Ventilkugel ohne ein Ablassen des Heizmediums wäre nicht möglich. Die zum Einspeisen des Heizmediums in den Mantelraum des bekannten Schiebers erforderlichen Kanäle in den Flanschen führen außerdem zu einem hohen Druckverlust für den gesamten Heizmantel. Die Kanäle im Flansch erfordern entsprechende korrespondierende Löcher in der Flanschdichtung. Wegen dieser Löcher muss ein in der Praxis bei der Montage des Schiebers oft auftretendes Verschieben der Dichtung unter allen Umständen vermieden werden.

Aus der DE 94 14 156 U1 (KSB Aktiengesellschaft) ist ein ummanteltes Kugelhahngehäuse bekannt. Beheizt werden die Flansche jedoch nicht, so dass sich dort kalte Stellen bilden, an denen das Produkt einfriert. Zur Montage bzw. Demontage sind die Öffnungen des Wärmemantels als Bestandteil einer Steckverbindung ausgebildet, die O-Ringe (Rundschnurringe) zur Abdichtung aufweisen. Neben dem sehr hohen Aufwand zur Herstellung dieses Kugelhahns ist als weiterer Nachteil zu nennen, dass die genannten Dichtungen es nicht erlauben, den Kugelhahn bei hohen Temperaturen und Drücken, z. B. bei etwa 300 °C und 15 bar, einzusetzen. Das Wechseln der Ventilkugel ist außerdem umständlich, denn das Heizmedium muss abgelassen und die anschließenden Rohre müssen auseinander gezogen werden.

Bekannt ist ferner ein Absperrelement nach Art eines Schiebers für eine Rohrleitung für heißes Gas (US 3 430 689, Pantke et al.). Hier werden nur die Ein- und Auslassflansche gekühlt. Die gesamte Anordnung ist erheblich umständlicher und aufwändiger als die nachstehend beschriebene erfindungsgemäße Beheizung eines Kugelhahns.

Der Erfindung liegt daher die Aufgabe zugrunde, die genannten Nachteile zu vermeiden und insbesondere bei einem Kugelhahn gleichzeitig folgende Teilaufgaben zu lösen. Eine bessere Beheizung der kritischen Stellen des Kugelhahns soll erreicht werden, um Verstopfungen der Rohrleitungen infolge von Kältebrücken im Kugelhahn mit hoher Sicherheit zu verhindern. Die Dichtscheiben und die Verschlusskugel, also der Dichtkörper, sollen problemlos ausgetauscht werden können, ohne dass das Wärmemedium für das Beheizen oder Kühlen des Kugelhahns abgelassen werden müsste. Die Kosten für die Herstellung der Heizvorrichtung des Kugelhahns sollen erheblich niedriger als im Stand der Technik liegen. Der Einbau des Kugelhahns soll erheblich einfacher und schneller möglich sein. Schließlich soll möglichst kein zusätzliches Wärmemedium nur für die Beheizung oder Kühlung des Kugelhahns erforderlich sein.

Alle diese Teilaufgaben werden gleichzeitig mit der Absperrarmatur der eingangs genannten Art erfindungsgemäß dadurch gelöst, dass die Absperrarmatur als ein Kugelhahn mit einem Mittelteil ausgebildet ist, dass das Mittelteil eine Verschlusskugel und zwei Kugelsitze aufweist und die Flansche unmittelbar an den Kugelsitzen anliegen.

Vorzugsweise sind sowohl der Einlassstutzen als auch der Auslassstutzen von einem Außenstutzen umgeben, welcher mit dem Heizmantel der anzuschließenden Rohrleitung verbunden werden kann. Das ohnehin vorhandene Heizmedium für die Rohrleitung wird auf diese Weise sehr nahe und unmittelbar an die Außenseite der Flansche des Kugelhahns beziehungsweise des Gehäuses des Kugelhahns herangeführt, so dass der Kugelhahn schnell und effektiv auf etwa die gleiche Temperatur wie der Wärmemantel der Rohrleitung aufgeheizt wird und aufgeheizt bleibt. Das Austauschen der Dichtscheiben und der Verschlusskugel kann auf gleiche Weise wie bei einem unbeheizten Kugelhahn, also ohne ein Ablassen des Wärmemediums für den Kugelhahn und ohne ein Auseinanderziehen der anschließenden Rohre vorgenommen werden. Insbesondere bei der Bauweise eines Kugelhahns mit Flanschen am Einlass und Auslass brauchen nur die Schrauben gelöst oder gelockert werden und das Mittelteil des Kugelhahns zwischen den beiden Flanschen herausgezogen werden. Zur Herstellung der Heizvorrichtung ist nur ein Verschweißen des Heizmantels der anzuschließenden Rohrleitung mit dem Außenstutzen des Kugelhahns erforderlich. Auf diese Weise kann ein beheizbarer Kugelhahn beinahe ebenso schnell und einfach wie ein unbeheizter Kugelhahn montiert werden. Das gleiche Wärmemedium wie für die anzuschließende Rohrleitung dient auch zum Beheizen des Kugelhahns. Ein zusätzliches Wärmemedium ist daher nicht erforderlich.

Besonders überraschend war, dass erfindungsgemäß trotz fehlendem Wärmemantel um das eigentliche Gehäuse des Kugelhahns eine ausreichende Beheizung erreicht wird. Der Grund liegt möglicherweise in dem fehlenden Druckverlust im Zwischenraum (Ringraum) zwischen dem Außenstutzen und dem Einlass-/Auslass-Stutzen, der den gleichen Querschnitt wie der Wärmemantel hat und daher ein Aufprallen des Heizmediums mit hoher Geschwindigkeit und mit starker Verwirbelung im Ringraum ermöglicht, die zu einer sehr guten Wärmeübertragung führt. Danach wird das Heizmedium ebenfalls ohne Druckverlust über einen Bypass um das eigentliche Kugelhahngehäuse herumgeführt.

Der erfindungsgemäße Kugelhahn kann auf beliebig hohe Temperaturen aufgeheizt werden, wobei die Temperaturgrenze sich nach der Temperaturbeständigkeit der Dichtungen richtet. In entsprechender Weise kann der Kugelhahn auch auf beliebig niedrige Temperaturen gekühlt werden. Alle üblichen Heizmedien beziehungsweise Kühlmedien können eingesetzt werden.

Einschränkungen hinsichtlich des zu fördernden Produktes durch die Anwendung der erfindungsgemäßen Beheizung bestehen nicht.

Der erfindungsgemäße Kugelhahn ist besonders einfach und problemlos an die Rohrleitung anzuschließen, wenn der Einlassstutzen beziehungsweise der Auslassstutzen weiter nach außen ragt als der Außenstutzen. Zuerst wird nämlich üblicherweise der Einlassstutzen beziehungsweise Auslassstutzen angeschweißt beziehungsweise angeschraubt. Dann erst wird der Außenstutzen an den Kugelhahn angeschlossen, ebenfalls durch Anschweißen oder Anschrauben.

Zum besonders schnellen, einfachen und problemlosen Austauschen der Dichtungen und der Verschlusskugel trotz der Beheizung des Kugelhahns ist es von Vorteil, wenn der Kugelhahn in an sich bekannter Weise ein die Verschlusskugel umgebendes Gehäuse aufweist, welches an der Einlass- und an der Auslassseite mit Flanschen, insbesondere mittels Schrauben, lösbar verbunden ist, und wenn der Einlassstutzen und der Auslassstutzen sowie die Außenstutzen von dem jeweiligen Flansch nach außen ragen. Zum Herausnehmen des Mittelteils mit dem Gehäuse werden dann nur die Schrauben gelöst und das Gehäuse herausgezogen. Bei einer ebenfalls an sich bekannten Trapezform der Flansche ist es dabei nur erforderlich, die Schrauben zu lockern, ohne sie zu entfernen.

Die Ventilkugel lässt sich ohne ein Ablassen des Heizmediums besonders einfach wechseln, wenn nach einer weiteren Ausgestaltung der Erfindung der Ringraum im Bereich des Flansches endet.

Vorteilhaft ist weiterhin, wenn der einlassseitige Heizmantel und der auslassseitige Heizmantel der Rohrleitung über eine Zusatzleitung (Bypass) miteinander verbunden sind. Die Anschlüsse der Zusatzleitung sind dabei vorzugsweise im Bereich der Außenstutzen des Kugelhahns angeordnet. Die dadurch mögliche relativ starke Strömung, insbesondere bei einem entsprechend großen Rohrquerschnitt der Zusatzleitung, ermöglicht eine hohe Turbulenz des Heizmediums im Bereich der Außenstutzen, so dass ein starker Wärmefluss vom Heizmedium zum Kugelhahn hin erreicht wird. Eventuelle Toträume an den Wärmeübertragungsflächen existieren infolge der hohen Turbulenzen des Heizmediums nicht. Die erfindungsgemäß erreichbare hohe Heizleistung ist bei den beheizbaren Kugelhähnen nach dem Stand der Technik nicht möglich.

Im Folgenden werden Ausführungsbeispiele der Erfindung im Vergleich zum Stand der Technik anhand von Zeichnungen näher beschrieben. Es zeigen
- Figur 1: einen Kugelhahn nach dem Stand der Technik, teilweise in einer Seitenansicht und teilweise im Schnitt,
- Figur 2: den Kugelhahn nach dem Stand der Technik nach Figur 1 in einer Ansicht in Richtung des Pfeiles 14 in Figur 1 auf den Einlass, also von vorn, ebenfalls teilweise von außen und teilweise im Schnitt,
- Figur 3: den Flansch eines aus dem Stand der Technik bekannten Kugelhahns mit angeschlossener Rohrleitung,
- Figur 4: einen Kugelhahn nach dem erfindungsgemäßen Ausführungsbeispiel im Schnitt,
- Figur 5: eine Variante des Flansches des erfindungsgemäßen Kugelhahnes nach Figur 4, im Längsschnitt mit angeschlossener Rohrleitung,
- Figur 6: eine perspektivische Ansicht eines erfindungsgemäßen Kugelhahns nach einem weiteren Ausführungsbeispiel und
- Figur 7: eine perspektivische Ansicht einer Rohrleitung mit einem eingebauten erfindungsgemäßen Kugelhahn.

In allen Zeichnungen haben gleiche Bezugszeichen die gleiche Bedeutung und werden daher gegebenenfalls nur einmal erläutert.

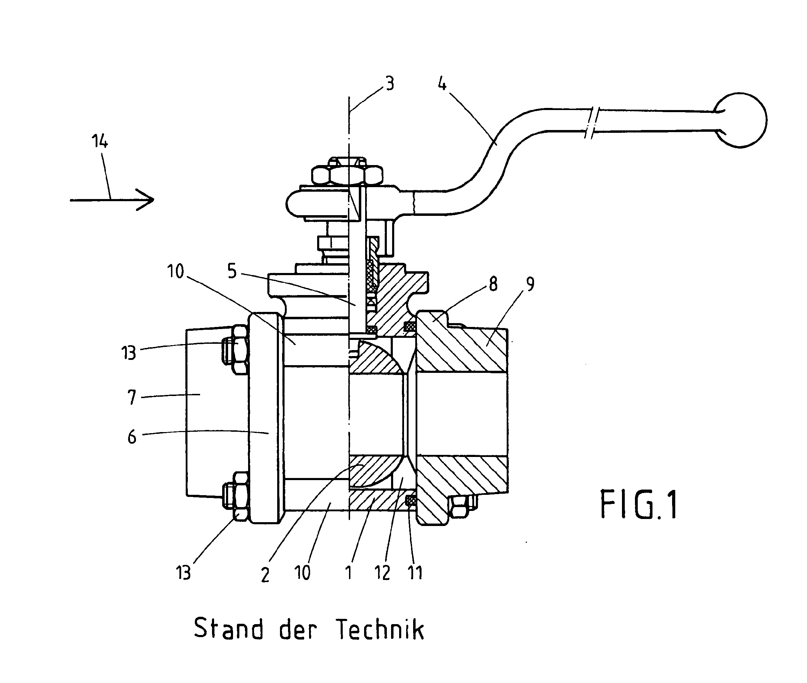

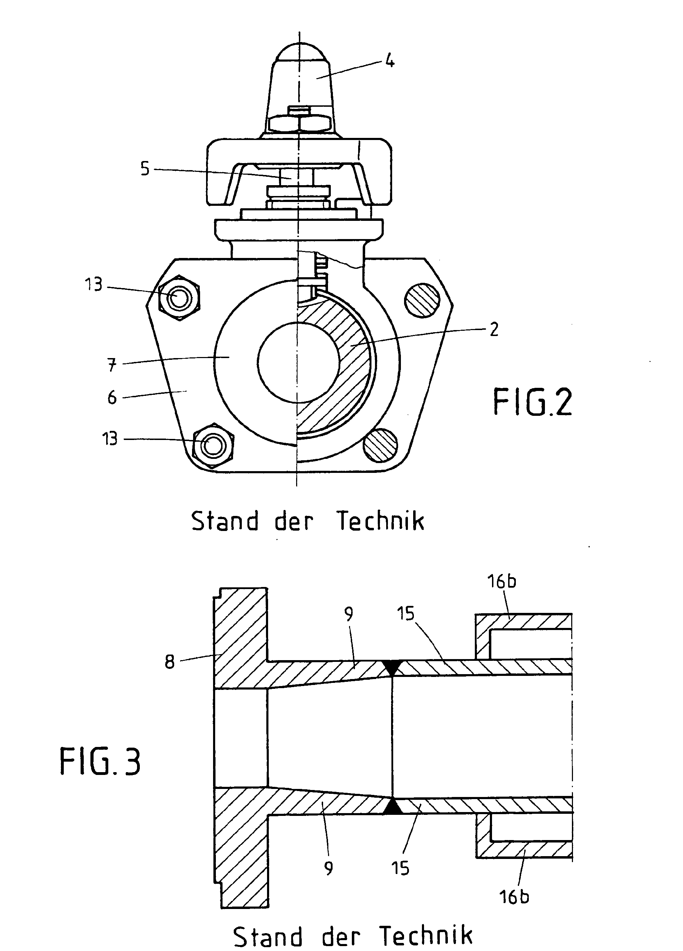

Der aus dem Stand der Technik bekannte Kugelhahn nach den Figuren 1 und 2 hat ein Gehäuse 1, in welchem die Verschlusskugel 2 um die Achse 3 drehbar angeordnet ist. Die Kugel 2 kann mittels des Handhebels 4 und des Bolzens 5 in die Schließ- und Öffnungsstellung gedreht werden. Am Einlass und Auslass sind außerdem ein Flansch 6 mit einem nach außen ragenden Einlassstutzen 7 sowie ein Flansch 8 mit einem ebenfalls nach außen ragenden Auslassstutzen 9 mittels Schraubenbolzen 10 derart miteinander verschraubt, so dass die inneren Dichtflächen der Flansche 6, 8 dichtend gegen die entsprechenden Flächen des Gehäuses 1 gepresst werden. Ferner sind in Figur 1 die Gehäusedichtung 11 und der Kugelsitz 12 zu erkennen, welche von Zeit zu Zeit ausgewechselt werden müssen. Dazu werden die Muttern 13 gelockert, so dass das Gehäuse 1 nach oben aus dem Raum zwischen den Flanschen 6 und 8 herausgezogen werden kann. Dann können die Dichtungen gewechselt werden und das Gehäuse mit der Verschlusskugel in entsprechender Weise wieder eingebaut werden.

Die aus dem Stand der Technik bekannte Verbindung des Kugelhahns mit einer beheizten Rohrleitung ist schematisch im Längsschnitt in Figur 3, beispielhaft am Auslassstutzen 9 des Flansches 8, dargestellt. Die Rohrleitung 15 wird an der Stirnseite mit der entsprechenden Stirnseite des Auslassstutzens 9 verschweißt. Anstelle dieses Stumpfschweißens kann auch ein Einsteckschweißen oder ein Verschrauben mittels eines entsprechenden Gewindes vorgesehen sein. Der Heizmantel 16b der Rohrleitung 15 ist ebenfalls in Figur 3 angedeutet.

Die Kältebrücken bei Kugelhähnen nach dem Stand der Technik und entsprechende Verstopfungen treten insbesondere an den Einlassstutzen beziehungsweise Auslassstutzen auf, wie die Erfinder festgestellt haben.

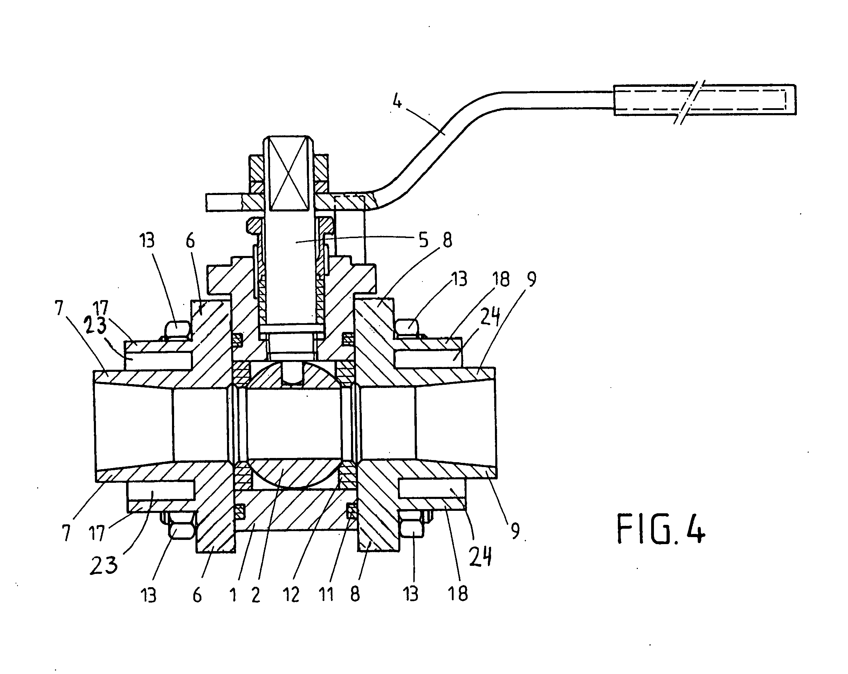

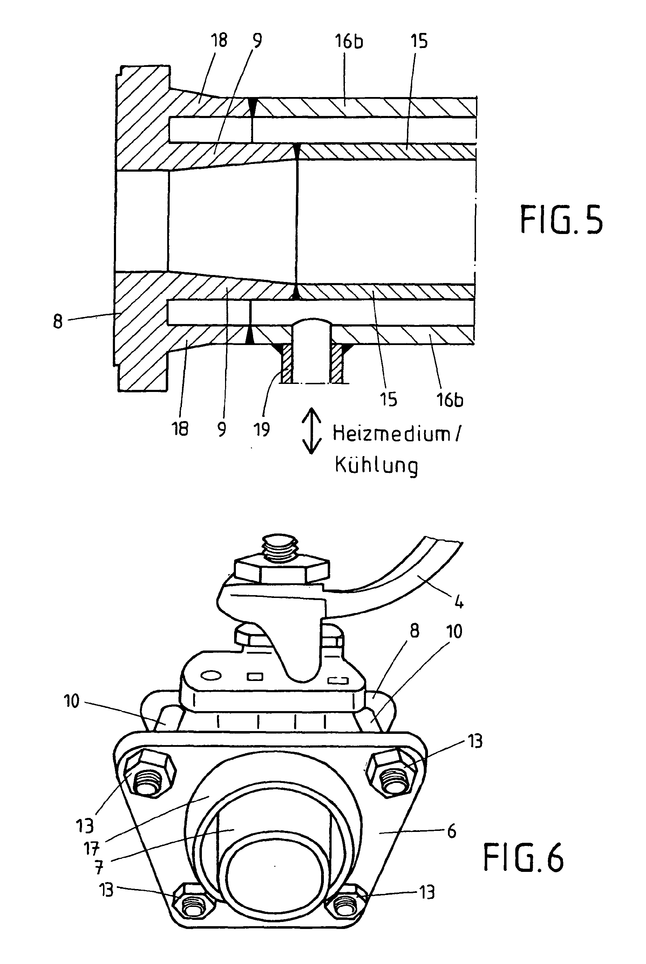

Der erfindungsgemäße Kugelhahn ist in einem Ausführungsbeispiel in Figur 4 im Längsschnitt dargestellt. Erfindungswesentlich ist, dass der Einlassstutzen 7 von einem Außenstutzen 17 und der Auslassstutzen 9 von einem Außenstutzen 18 umgeben ist, wobei diese Außenstutzen 17, 18 zum Anschließen des Heizmantels der Rohrleitung vorgesehen und geeignet sind. Ein entsprechender Anschluss der Rohrleitung 15 an den Auslassstutzen 9 sowie der Anschluss des Heizmantels 16b an den Außenstutzen 18 des Flansches 8 sind schematisch im Schnitt in Figur 5 dargestellt. Die Anschlüsse wurden hier durch Stumpfschweißen vorgenommen.

Figur 6 zeigt eine perspektivische Ansicht eines weiteren erfindungsgemäßen Kugelhahns, wobei der Einlassstutzen 7 zum Betrachter zeigt. Wie beim Kugelhahn nach Figur 4 sind der Einlassflansch 6, der Einlassstutzen 7 und der Außenstutzen 17 einstückig ausgeführt. Entsprechendes gilt für den Auslassflansch 8.

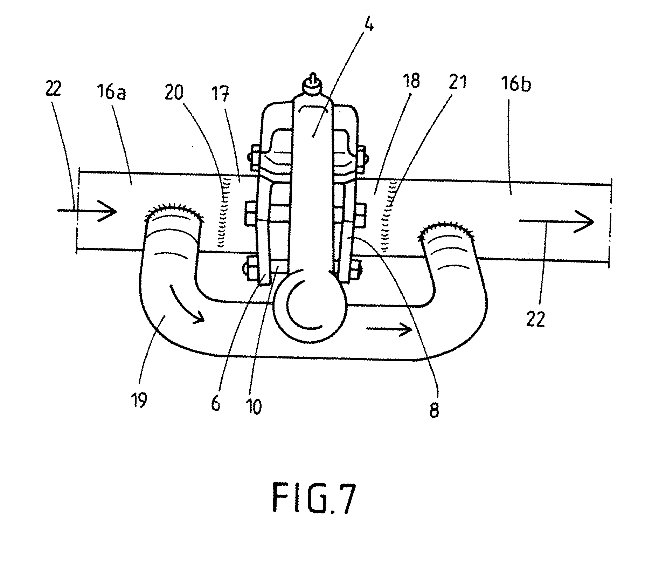

Nach dem Einbau des erfindungsgemäßen Kugelhahns in die Rohrleitung wird das Wärmeträgermedium für den Heizmantel 16 über eine Zusatzleitung 19 vom einen Ende des Kugelhahns zum anderen geführt und damit der Kugelhahn überbrückt (Figur 7). Bei einer Zusatzleitung 19 mit einem entsprechend großen Innenquerschnitt entsteht im Bereich der Außenstutzen 17, 18 eine sehr turbulente Strömung, so dass eine besonders effektive Wärmeübertragung vom Wärmeträgermedium auf den Kugelhahn erfolgt. Die Schweißnähte 20, 21 zwischen den Außenstutzen 17, 18 und dem einlassseitigen Heizmantel 16a bzw. dem auslassseitigen Heizmantel 16 b sind in Figur 7 angedeutet. Die Pfeile 22 zeigen die Strömungsrichtung des Heizmediums.

Zum Einbau des erfindungsgemäßen Kugelhahns wird zunächst die Rohrleitung 15 für das Produkt an den inneren Einlassstutzen 7 beziehungsweise an den inneren Auslassstutzen 9 durch Schweißen angeschlossen. Danach werden die Heizmäntel 16a, 16b mit dem jeweiligen Außenstutzen 17, 18 verschweißt.

Als Heizmedium für den Heizmantel 16 können die üblichen Wärmeträger, beispielsweise Wasser, Dampf mit 4 bar Druck oder Dampf mit 42 bar Druck oder Wärmeträgeröl (Thermalöl) verwendet werden.

Bei einem Versuch mit dem erfindungsgemäßen Kugelhahn wurde als Wärmeträger Dampf mit einer Temperatur von 180 °C verwendet. Nachdem die Temperatur des Gehäuses 1 des Kugelhahns 1 stationär war, also nicht mehr stieg, wurde mittels eines Lasermessverfahrens an der Außenseite des Gehäuses 1 ebenfalls eine Temperatur von 180 °C festgestellt. Wird dagegen eine Heiztasche um das Gehäuse des Kugelhahns angeordnet, so erreicht die Außenseite des Gehäuses nur eine Temperatur von 162 °C, die ebenfalls mittels des Lasermessverfahrens bestimmt worden ist.

Erfindungsgemäß wird das Heizmedium bis an die Außenseite der Flansche 6, 8 und damit direkt an die kritischen Stellen des Kugelhahns herangeführt, an denen im Stand der Technik Kältebrücken und damit Probleme durch Erstarren des Produkts auftreten. Die im Stand der Technik vorhandenen Probleme, die insbesondere beim Anfahren einer Anlage auftreten und trotz Vorheizens nicht beseitigt werden können, treten bei der erfindungsgemäßen Lösung nicht mehr auf. Die Längen der Einlassstutzen, der Auslassstutzen und der Außenstutzen können erfindungsgemäß unterschiedlich sein, wobei größere Längen dieser Stutzen bevorzugt sind.

Vorzugsweise bestehen das Gehäuse 1 und die Flansche 6, 8 aus Edelstahl. Der erfindungsgemäße Kugelhahn lässt sich nicht nur bei erhöhter und auch hoher Temperatur des durchströmenden Produktes, sondern auch für Produkte, die unter hohem Druck durch Rohrleitungen gepresst werden, einsetzen.

Zusammenfassend liegen die wesentlichen Vorteile des erfindungsgemäßen Kugelhahns zum einen in einer besseren und schnelleren Einbindung des Kugelhahns in eine Doppelmantelleitung. Die Montage des Kugelhahns und der Rohrleitungsteile wird wesentlich vereinfacht. Eine bessere Beheizung an den kritischen Stellen des Kugelhahns mit einer sehr guten Wärmeübertragung wird erreicht. Da das Heizmedium beim Wechseln des Dichtungssatzes des Kugelhahns nicht entleert werden muss, tritt die bisherige Gefahr von Unfällen durch Verbrühungen nicht mehr auf. Eine ansonsten aufwändige Herstellung von Hilfsmitteln zur Beheizung des Kugelhahns ist nicht erforderlich.

### Bezugszeichenliste

- 1: Gehäuse
- 2: Verschlusskugel
- 3: Achse
- 4: Handhebel
- 5: Bolzen
- 6: Flansch
- 7: Einlassstutzen
- 8: Flansch
- 9: Auslassstutzen
- 10: Schraubenbolzen
- 11: Gehäusedichtung
- 12: Kugelsitz
- 13: Mutter
- 14: Pfeil
- 15: Rohrleitung
- 16a: einlassseitiger Heizmantel
- 16b: auslassseitiger Heizmantel
- 17: Außenstutzen
- 18: Außenstutzen
- 19: Zusatzleitung
- 20: Schweißnaht
- 21: Schweißnaht
- 22: Pfeil
- 23: Ringraum
- 24: Ringraum

## Patentansprüche

1. Beheizbare oder kühlbare Absperrarmatur mit Flanschen (6; 8) an der Einlass- und an der Auslassseite und mit einem Einlassstutzen (7) und einem Auslassstutzen (9) für das durchströmende Fluid, wobei der Einlassstutzen (7) und der Auslassstutzen (9) von dem jeweiligen Flansch (6; 8) nach außen ragen und wobei mindestens einer der Stutzen (7; 9) von einem Außenstutzen (17; 18) umgeben ist, und wobei der mindestens eine Stutzen (7; 9) und der umgebende Außenstutzen (17; 18) einen einseitig geschlossenen Ringraum (23; 24) für das Heiz- oder Kühlmedium bilden,
**dadurch gekennzeichnet,**
**dass** die Absperrarmatur als ein Kugelhahn mit einem Mittelteil ausgebildet ist, dass das Mittelteil eine Verschlusskugel (2) und zwei Kugelsitze (12) aufweist und die Flansche (6; 8) unmittelbar an den Kugelsitzen (12) anliegen.

2. Absperrarmatur nach Anspruch 1,
**dadurch gekennzeichnet,**
**dass** der Einlassstutzen (7) bzw. der Auslassstutzen (9) weiter nach außen ragt als der Außenstutzen (17; 18).

3. Absperrarmatur nach einem der vorhergehenden Ansprüche,
**dadurch gekennzeichnet,**
**dass** der Kugelhahn ein die Verschlusskugel (2) umgebendes Gehäuse (1) aufweist, welches an der Einlass- und an der Auslassseite mit den Flanschen (6; 8) lösbar verbunden ist.

4. Absperrarmatur nach dem vorhergehenden Anspruch,
**dadurch gekennzeichnet,**
**dass** der Ringraum (23; 24) im Bereich des Flansches (6; 8) endet.

## Claims

1. A heatable or coolable shutoff fitting comprising flanges (6;8) on the inlet side and on the outlet side and an inlet nozzle (7) and an outlet nozzle (9) for the fluid flowing through, the inlet nozzle (7) and the outlet nozzle (9) projecting outwards from the associated flange (6;8) and at least one of the sockets (7;9) being surrounded by an outer casing (17;18) and the at least one nozzle (7;9) and the surrounding outer casing (17;18) forming an annular space (23;24) closed on one side for the heating or cooling medium, **characterized in that** the shutoff fitting is in the form of a ball valve with a middle part, the middle part comprises a closure ball (2) and two ball seats (12) and the flanges (6;8) rest immediately against the ball seats (12).

2. A shutoff fitting as claimed in claim 1, **characterized in that** the inlet nozzle (7) or the outlet nozzle (9) project further outwards than the outer casing (17;18).

3. A shutoff fitting as claimed in any of the preceding claims, **characterized in that** the ball valve comprises a housing (1) which surrounds the closure ball (2) and which is releasably connected to the flanges (6;8) on the inlet and outlet sides.

4. A shutoff fitting as claimed in the preceding claim, **characterized in that** the annular space (23;24) ends in the vicinity of the flange (6;8).

## Revendications

1. Robinet de fermeture, pouvant être chauffé ou refroidi, comportant des brides (6 ; 8) du côté entrée et du côté sortie et un raccord d'entrée (7) et un raccord de sortie (9) pour le fluide à faire passer, le raccord d'entrée (7) et le raccord de sortie (9) dépassant vers l'extérieur de la bride correspondante (6 ; 8) et au moins l'un des raccords (7 ; 9) étant entouré par une tubulure extérieure (16 ; 18), ce raccord (7 ; 9) et la tubulure extérieure qui l'entoure (17 ; 18) formant une chambre annulaire (23 ; 24) fermée d'un côté pour le fluide de chauffage ou de refroidissement,
**caractérisé en ce que**
le robinet de fermeture est un robinet à boisseau sphérique comportant une partie centrale qui présente une bille d'obturation (2) et deux sièges de bille (12) et les brides (6 ; 8) s'appliquent directement sur les sièges de bille (12) .

2. Robinet de fermeture selon la revendication 1,
**caractérisé en ce que**
le raccord d'entrée (7) ou le raccordement de sortie (9) dépasse plus à l'extérieur que la tubulure extérieure (17 ; 18).

3. Robinet de fermeture selon l'une des revendications précédentes,
**caractérisé en ce que**
le robinet à boisseau sphérique présente un boîtier (1) entourant la bille d'obturation (2), et relié de manière amovible aux brides (6 ; 8) du côté entrée et du côté sortie.

4. Robinet de fermeture selon la revendication précédente,
**caractérisé en ce que**
la chambre annulaire (23 ; 24) se termine au niveau des brides (6 ; 8).
